# EUROPÄISCHE PATENTSCHRIFT

(11) **EP 1 405 744 B1**
(45) Veröffentlichungstag und Bekanntmachung des Hinweises auf die Patenterteilung: **07.03.2012**
(21) Anmeldenummer: 03021415.9
(22) Anmeldetag: 23.09.2003
(51) Int. Cl.: B60J 1/02, B60J 1/18, B60J 7/00

(54) **Frontfensterscheibe für ein Fahrzeug**
Windscreen for a vehicle
Pare-brise pour un véhicule

(30) Priorität: 26.09.2002 DE 10245245
(43) Veröffentlichungstag der Anmeldung: 07.04.2004
(60) Teilanmeldung: 11009620.3
(73) Patentinhaber: GM Global Technology Operations LLC, Detroit, MI 48265-3000 (US)
(72) Erfinder: Hallik, Matthias, 65207 Wiesbaden (DE)

(56) Entgegenhaltungen:
- EP-A- 0 992 384
- EP-A- 1 068 969
- DE-C- 10 025 051
- FR-A- 2 782 973

## Beschreibung

Die Erfindung bezieht sich auf ein Kraftfahrzeug mit einer Frontfensterscheibe nach dem Oberbegriff des Anspruchs 1. Ein solches Fahrzeug ist aus FR 2 782 973 bekannt.

Der Erfindung liegt die Aufgabe zugrunde, ein Kraftfahrzeug anzugeben, das mit eine großflächige Frontfensterscheibe mit einer robusten Struktur kombiniert.

Diese Aufgabe wird erfindungsgemäß gelöst durch ein Kraftfahrzeug nach Anspruch 1. Unteransprüche sind auf bevorzugte Weiterbildungen gerichtet.

Bevorzugte Ausgestaltungen des erfindungsgemäßen Kraftfahrzeugs sind in den Unteransprüchen beschrieben.

In einer bevorzugten Ausführungsform weist zumindest der Fensterbereich und/oder der Dachfensterbereich im Querschnitt eine konvexe Form auf. Bevorzugt schließen dabei die Sekanten am Übergang zwischen Fensterbereich und Dachfensterbereich einen Winkel zwischen 90° und 150° ein. Insbesondere erstreckt sich die Sekante des Dachfensterbereiches parallel zu einer horizontal angeordneten Ebene oder schließt mit dieser einen spitzen Winkel von 0° bis 15° ein.

Für eine besonders gleichmäßige und somit ablösefreie Umströmung des vorderen bzw. hinteren Fahrzeugbereiches sind der Fensterbereich und der Dachfensterbereich als ein einteiliger Fensterbereich ausgebildet. Mit anderen Worten: Der Fensterbereich ist mit dem Dachfensterbereich einstückig ausgebildet. Somit sind durch üblicherweise vorgesehene vordere bzw. hintere Dachrahmen resultierende Übergänge sicher vermieden. Insbesondere durch eine ansteigende Fensterlinie oder starke Neigung des Fensterbereiches, insbesondere der Heck- oder Frontscheibe, ist eine möglichst günstige Strömung ermöglicht. Bevorzugt sollte die Wölbung oder Neigung konstant verlaufen. Insbesondere verläuft die Änderung der Oberflächenkrümmung am Übergang vom Fensterbereich in den Dachfensterbereich vorzugsweise gleichmäßig. Neben der vergrößerten Sicht nach vorne, zur Seite und nach hinten sowie der verbesserten aerodynamischen Eigenschaften weist ein derartiger einen Teilbereich des Daches überströmender Fensterbereich auch eine besonders gute und ansprechende Formgebung auf.

Für einen besonders großen Panoramablick sind der Fensterbereich und der Dachfensterbereich in ihrer gesamten Erstreckung durchsichtig ausgebildet. In einer bevorzugten Ausführungsform weist dabei die Fensterscheibe ein Länge zu Breite Verhältnis von 0,7 bis 1,6, vorzugsweise von 0,9 bis 1,6 auf. Hiermit ist gegenüber vorbekannten Scheiben, welche ein Länge zu Breite Verhältnis von kleiner 0,6 ausweisen, eine vergrößerte lichtdurchlässige Fläche, insbesondere eine verlängerte Fensterfläche ermöglicht.

Zur Verbesserung der Fahrersicht sowie zur Verbesserung der aerodynamischen Eigenschaften der Karosserie ist der Fensterbereich und der Dachfensterbereich bevorzugt durch eine sich mindestens teilweise über das Fahrzeugdach erstreckende Frontscheibe gebildet. Durch einen derartigen stufenlosen Übergang eines Fensterbereiches von der Gürtellinie des Innenraumes bis in das Dach hinein ist eine möglichst ablösefreie Umströmung des vorderen Fahrzeugbereiches ermöglicht. Darüber hinaus kann durch einen derartigen durchgehenden Fensterbereich der vordere Dachrahmen, insbesondere der Dachrahmen zwischen der A-Säule, entfallen. Je nach Art und Ausführung erstreckt sich der Dachfensterbereich bevorzugt bis zur Dachmitte, insbesondere bis zum mittig angeordneten Dachspriegel.

Für einen besonders guten Schutz gegen hohe mechanische und/oder thermische Belastungen und ein besonders gutes Bruch- oder Splitterverhalten des Fensterbereiches und des Dachfensterbereiches sind diese zweckmäßigerweise aus Sicherheitsglas, insbesondere Silikatglas, gebildet. Je nach Anordnung und Ausführung des Fensterbereiches mit dem Dachfensterbereich ist bei einer Frontscheibe bevorzugt ein Verbund-Sicherheitsglas (kurz VSG genannt) vorgesehen. Eine derartige aus einem Verbund-Sicherheitsglas gebildete Frontscheibe oder Windschutzscheibe weist ein normales Splitterbild auf, bei welcher auch nach Scheibenbruch eine Durchsicht noch ermöglicht ist. Hierzu sind zwei Glasscheiben über eine Kunststofffolie, z.B. Polyvinylbutyral, miteinander verklebt. Je nach Art und Ausführung der Kunststofffolie, z.B. Anordnung einer zusätzlichen Kunststofffolie bei einer Sekuriflex-Scheibe sind besonders gute optische und mechanische Eigenschaften, wie z.B. Abrieb und Kratzfestigkeit des Fensterbereiches gegeben.

Zur Reduzierung der Aufheizung des Fahrgastinnenraums durch Sonneneinstrahlung ist zweckmäßigerweise der Dachfensterbereich zumindest teilweise eingefärbt. Darüber hinaus kann zusätzlich auch der Fensterbereich eingefärbt oder getönt sein. Vorzugsweise ist der Dachfensterbereich zumindest teilweise dunkler als der Fensterbereich eingefärbt. Beispielsweise ist der Fensterbereich gegenüber dem Dachfensterbereich mit steigendem Tönungsgrad grün oder bronzefarben eingefärbt. Durch eine derartig grün oder bronzefarben eingefärbte Scheibe ist diese neben der Einsetzung als Sichtscheibe auch als Wärmeschutzglas eingesetzt, um die Transmission für Infrarotlicht stärker als für die kürzeren Wellen zu beschränken.

Zum Schutz des Fensterbereiches, insbesondere des Dachfensterbereiches vor Vereisung oder Beschlagen ist dieser bevorzugt zumindest teilweise mit einem Heizleiter und/oder Stromleiter versehen. Der Stromleiter dient dabei insbesondere der Versorgung von elektrischen Komponenten, z.B. eines elektrisch ablenkbaren Innenspiegels. Je nach Art und Ausführung eines derartigen Dachfensterbereiches wird der Heizleiter und/oder Stromleiter beispielsweise im sogenannten Siebdruckverfahren auf das Sicherheitsglas aufgebracht und während eines Vorspannprozesses aufgesintert. Durch eine weitere Galvanisierung wird der Heizleiter verstärkt, vergütet und gegen Umwelteinflüsse geschützt.

Ferner werden z.B. bei den sogenannten VSG-Scheiben als Heizleiter ausgebildete Heizdrähte in Wellenlinien in der Art einer Klebefolie in das Sicherheitsglas eingebracht. Dabei werden die einzelnen Heizdrähte in Reihe und/oder parallel verschaltet, um den vorgesehenen Widerstand zu erzielen.

Zweckmäßigerweise erstreckt sich die Fensteröffnung und die Fensterscheibe zwischen den beiden A-Säulen und den jeweils daran anschließenden seitlichen Längsrahmen des Fahrzeugdachs. In Längsrichtung erstreckt sich die Fensteröffnung und die Fensterscheibe vorteilhafterweise bis zum mittleren Bereich des Fahrzeugdachs und vorzugsweise bis auf Höhe der mittleren Verstärkungsholme, insbesondere der B-Säule. Durch eine derartige Verlängerung der Frontscheibe bis in den Dachbereich ist ein Rund-um-Blick ermöglicht, wobei die Scheibe auch vom Font aus durchsehbar ist. In einer bevorzugten Ausführungsform weist die Fensterscheibe einen Dachfensterbereich, der im wesentlichen zwischen den seitlichen Längsrahmen gebildet ist, und einen Fensterbereich auf, der im wesentlichen zwischen den beiden A-Säulen gebildet ist.

Mit anderen Worten: Das Kraftfahrzeug weist einen oberhalb einer Gürtellinie des Fahrzeuginnenraumes angeordneten oberen Aufsatz, der zwei sich entlang der jeweiligen Längsseite des Fahrzeugs erstreckende und mindestens das Fahrzeugdach seitlich begrenzende Dachrahmen und eine Fensteranordnung umfasst, welche einen unterhalb des jeweiligen Dachrahmens sich seitlich erstreckenden Fensterbereich und eine sich zwischen vertikalen Verstärkungsholmen von der Gürtellinie bis in einen Teilbereich des Daches hinein erstreckende Frontfensterscheibe aufweist.

Zur Reduzierung der Innenraumaufheizung ist zweckmäßigerweise zwischen den seitlichen Längsrahmen ein längsbeweglicher Sonnenschutz angeordnet. Der längsbewegliche Sonnenschutz überdeckt dabei im wesentlichen die Frontfensterscheibe zumindest im Teil des Dachfensterbereiches. Je nach Art und Ausführung des Sonnenschutzes ist dieser beispielsweise als Rollo oder Dachhimmel ausgebildet.

Die mit der Erfindung erzielten Vorteile bestehen insbesondere darin, dass durch einen durchgehenden Fensterbereich von der Gürtellinie bis in den Dachbereich hinein eine möglichst großzügige Sicht nach vorne, zur Seite und nach hinten ermöglicht ist. Die daraus resultierende Reduzierung der Dachrahmenteile um das vordere oder hintere Querrahmenteil ermöglicht eine freie Sicht des Fahrers und auch der Fontinsassen nach vorne bzw. hinten und nach oben. Neben den verbesserten Sichteigenschaften eines derartigen großflächigen Fensterbereiches weist ein derartiges Fahrzeug darüber hinaus besonders gute aerodynamische Eigenschaften auf. Dies ist insbesondere durch den nahezu übergangsfreien, lediglich eine Neigung aufweisenden durchgehenden großflächigen Fensterbereich ermöglicht.

Ausführungsbeispiele der Erfindung werden anhand einer Zeichnung näher erläutert. Darin zeigen:
- Figur 1: schematisch in perspektivischer Darstellung ein Fahrzeug mit einer vorderen Frontfensterscheibe, und
- Figur 2: eine Draufsicht auf das Fahrzeug der Fig. 1.

Einander entsprechende Teile sind in allen Figuren mit den gleichen Bezugszeichen versehen.

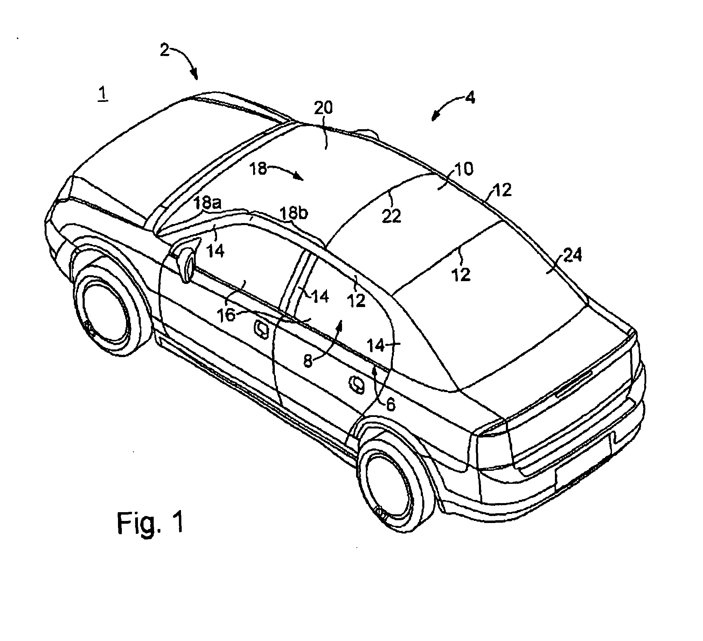

Figur 1 zeigt ein Fahrzeug 1 mit einem Karosserieaufbau 2. Der Karosserieaufbau 2 ist eine selbsttragende Karosserie, welche einen oberen, oberhalb einer Gürtellinie 6 eines Innenraumes 8 verlaufenden Aufsatz 4 umfasst. Der Innenraum 8 ist durch ein Dach 10 abgedeckt. Der obere Aufsatz 4 umfasst einen Dachrahmen 12, der aus zwei sich entlang der jeweiligen Längsseite des Fahrzeugs 1 erstreckende und mindestens das Fahrzeugdach 10 seitlich begrenzende Längsrahmenteile ausweist. Das Dach 10 und der obere Dachrahmen 12 des oberen Aufsatzes 4 ist über mehrere vertikal verlaufende Dachverstärkungsholme 14, insbesondere die A-, B- und C-Säule, nach unten auf die Gürtellinie 6 abgestützt, wobei beispielsweise auch die B-Säule entfallen kann. Unterhalb des jeweiligen Dachrahmens 12 zwischen Hochstreben oder den Verstärkungsholmen 14 erstreckt sich seitlich ein aus mehreren Scheiben gebildeter Seitenfensterbereich 16.

Darüber hinaus weist der obere Aufsatz 4 zwischen den Längsrahmenteilen des Dachrahmen 12 in einer Fahrzeugöffnung eine Frontfensterscheibe 18 auf. Die Frontfensterscheibe 18 ist durch einen Fensterbereich 18a und einen daran anschließenden Dachfensterbereich 18b gebildet. Der Dachfensterbereich 18b erstreckt sich bis zum mittleren Bereich des Dachs 10, vorzugsweise bis auf Höhe des als mittlere Hochstrebe ausgebildeten Verstärkungsholm 14, d.h. der B-Säule. D.h. der Dachfensterbereich 18b wird vom im Dach 10 mittig angeordneten als Querrahmenteil ausgebildeten Dachspriegel 22 begrenzt. Der nicht lichtdurchlässige Dachbereich des Dachs 10 erstreckt sich dabei vom Dachspriegel 22 bis zu einem Querrahmenteil des Dachrahmens, das in Längsrichtung gesehen am hinteren Ende zwischen den beiden Längsrahmenteilen angeordnet ist.

Die Frontfensterscheibe 18 ist eine durchgehende Glasfläche, so dass der Fensterbereich 18a und der Dachfensterbereich 18b einteilig ausgebildet sind. Durch eine derartig verlängerte und durchgehende Frontfensterscheibe 18, welche eine möglichst konstante Wölbung oder Neigung aufweist, ist eine besonders sportliche und aerodynamische Form bei gleichzeitig größtmöglicher Sicht in Art eines Panoramafensters gegeben. Sowohl für den Fahrer als auch für die im Font sitzenden Passagiere oder Insassen des Fahrzeugs ist ein besonders großes Sichtfeld ermöglicht.

Für einen besonders guten Schutz gegen hohe mechanische und/oder thermische Belastungen ist die Frontfensterscheibe 18 aus Sicherheitsglas, insbesondere Silikatglas, gebildet. Die Frontfensterscheibe 18 ist bevorzugt als Verbund-Sicherheitsglas ausgeführt.

Die Frontfensterscheibe 18 weist im Querschnitt zumindest in einem der beiden Bereiche, d.h. im Fensterbereich 18a oder im Dachfensterbereich 18b, eine konvexe Form auf. Am Übergang der beiden Fensterbereiche 18a und 18b schließen die Sekanten einen Winkel zwischen 90° bis 150° ein. Die Sekante des Dachfensterbereichs 18b erstreckt sich parallel zu einer horizontal angeordneten Ebene oder schließt mit dieser einen spitzen Winkel von 0° bis 15° ein. Bevorzugt weist die Frontfensterscheibe 18 eine Länge zu Breite im Verhältnis von 0,7 bis 1,6, vorzugsweise von 0,9 bis 1,6 auf.

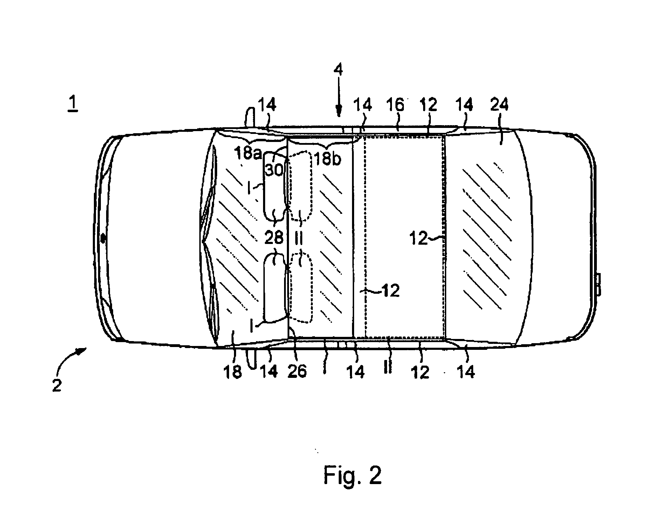

Figur 2 zeigt das Fahrzeug 1 in Draufsicht. Zum Schutz vor Sonne ist zwischen den Dachholmen 12 eine längsbewegliche Sonnenschutzeinheit 26 angeordnet. Die Sonnenschutzeinheit 26 ist vorzugsweise als Rollo ausgebildet. Dazu wird die Sonnenschutzeinheit 26 in nicht näher dargestellten Führungselementen, welche entlang der seitlichen Dachrahmen angeordnet sind, geführt. Je nach Einstellung kann die längsbewegliche Sonnenschutzeinheit 26 in den Führungselementen zwischen zwei Endpositionen - einem geöffneten oder einem geschlossenen Zustand bewegt werden.

Im bestimmungsgemäßen Zustand, d.h. im geöffneten Zustand I der Sonnenschutzeinheit 26 ist diese in den lichtdurchlässigen Dachfensterbereich 18b eingeführt. Im geschlossenen oder Ruhezustand II wird die Sonnenschutzeinheit 26 in eine Öffnung zwischen dem Fahrzeugdach 4 und einer Fahrzeuginnenhaut, dem sogenannten Dachhimmel, eingeführt.

Zusätzlich zur längsbeweglichen großflächigen Sonnenschutzeinheit 26 kann ein insassenbezogener Sonnenschutz vorgesehen sein, welcher als Sonnenblenden 28 ausgebildet ist. Dabei sind die Sonnenblenden 28 beispielsweise an einer vorderen Querstange 30 der Sonnenschutzeinheit 26 angeordnet. Die Sonnenblenden 28 werden im hochgeklappten Zustand zusammen mit der Sonnenschutzeinheit 26 in die Öffnung im Dachhimmel eingeführt.

Alternativ oder zusätzlich kann der Dachfensterbereich 18b eingefärbt, insbesondere getönt sein. In einer bevorzugten Ausführungsform ist der Dachfensterbereich 18b zumindest teilweise dunkler als der Fensterbereich 18a eingefärbt.

Zum Schutz vor Vereisung kann die Fensterscheibe 18 des Weiteren zumindest teilweise mit einem Heizleiter in nicht näher dargestellter Art und Weise versehen sein. Alternativ oder zusätzlich kann die Fensterscheibe 18 mit einem Stromleiter versehen sein. Hierdurch kann beispielsweise ein elektrisch ablenkbarer Innenspiegel oder eine andere elektrische Komponente elektrisch versorgt werden.

Die Querstange 30 der Sonnenschutzeinheit 26 wird bevorzugt an der A-Säule in dafür vorgesehene Einführungen eingehängt. Die Einführung muss dabei derart gestaltet sein, dass ein durch das Klappen der Sonnenblenden hervorgerufenes Drehmoment formschlüssig übertragen werden kann. Alternativ zur Einhängung der Sonnenschutzeinheit 26 in den Dachverstärkungsholmen 14 können entsprechend durchsichtig, z.B. aus Plexiglas gefertigte Einführungen an die Frontfensterscheibe 18 aufgebracht, insbesondere geklebt sein.

### Bezugszeichenliste

- 1: Fahrzeug
- 2: Karosserieaufbau
- 4: Aufsatz
- 6: Gürtellinie
- 8: Innenraum
- 10: Fahrzeugdach
- 12: Dachrahmen
- 14: Dachverstärkungsholme
- 16: Seitenfensterbereich
- 18: Frontfensterscheibe
- 18a: Fensterbereich
- 18b: Dachfensterbereich
- 20: Frontscheibe
- 22: Dachspriegel
- 24: verlängerte Heckscheibe
- 26: Sonnenschutzeinheit
- 28: Sonnenblenden
- 30: Querstange

## Patentansprüche

1. Kraftfahrzeug (1) mit einer eine Fahrzeugöffnung verschließenden Frontfensterscheibe (18), wobei die Fahrzeugöffnung und die Frontfensterscheibe (18) sich entlang zwei ein Fahrzeugdach (10) tragender A-Säulen (14) und in den Bereich des Fahrzeugdachs (10) erstrecken, **dadurch gekennzeichnet, dass** das Fahrzeugdach (10) einen Dachrahmen (12) aufweist, der aus zwei Längsrahmenteilen und zwei Querrahmenteilen gebildet ist, wobei ein erstes Querrahmenteil am hinteren Ende der Längsrahmenteile und ein zweites Querrahmenteil (22) im Bereich zwischen den Längsrahmenteilen im Dach (10) mittig angeordnet ist und dass die Frontfensterscheibe (18) durch das zweite Querrahmenteil (22) begrenzt ist.

2. Kraftfahrzeug nach Anspruch 1, bei dem sich die Fahrzeugöffnung und die Frontfensterscheibe (18) zwischen den beiden A-Säulen (14) und zwischen den jeweils daran anschließenden seitlichen Längsrahmenteilen erstrecken.

3. Kraftfahrzeug nach Anspruch 1 oder 2, bei dem sich die Fahrzeugöffnung und die Frontfensterscheibe (18) bis zum mittleren Bereich des Fahrzeugdachs (10) und vorzugsweise bis auf Höhe von B-Säulen (14) erstrecken, und bei dem die Frontfensterscheibe (18) einen Dachfensterbereich (18b) aufweist, der im wesentlichen zwischen den seitlichen Längsrahmenteilen gebildet ist, und einen Fensterbereich (18a) aufweist, der im wesentlichen zwischen den beiden A-Säulen gebildet ist.

4. Kraftfahrzeug nach Anspruch 3, bei dem der zumindest der Fensterbereich (18a) und/oder der Dachfensterbereich (18b) im Querschnitt eine konvexe Form aufweist.

5. Kraftfahrzeug nach Anspruch 3 oder 4, bei dem die Sekanten am Übergang zwischen Fensterbereich (18a) und Dachfensterbereich (18b) einen Winkel zwischen 90° und 150° einschließen.

6. Kraftfahrzeug nach einem der Ansprüche 3 bis 5, bei dem sich die Sekante des Dachfensterbereiches (18b) parallel zu einer horizontal angeordneten Ebene erstreckt oder mit dieser einen spitzen Winkel von 0° bis 15° einschließt.

7. Kraftfahrzeug nach einem der Ansprüche 3 bis 6, bei dem der Fensterbereich (18a) und der Dachfensterbereich (18b) als ein einteiliger Fensterbereich ausgebildet sind.

8. Kraftfahrzeug nach einem der Ansprüche 3 bis 7, bei dem die Änderung der Oberflächenkrümmung am Übergang vom Fensterbereich (18a) in den Dachfensterbereich (18b) gleichmäßig verläuft.

9. Kraftfahrzeug nach einem der Ansprüche 3 bis 8, bei dem der Fensterbereich (18a) und der Dachfensterbereich (18b) in ihrer gesamten Erstreckung durchsichtig ausgebildet sind.

10. Kraftfahrzeug nach einem der Ansprüche 3 bis 9, bei der der Dachfensterbereich (18b) zumindest teilweise eingefärbt ist.

11. Kraftfahrzeug nach einem der Ansprüche 3 bis 10, bei der der Dachfensterbereich (18b) zumindest teilweise dunkler als der Fensterbereich (18a) eingefärbt ist.

12. Kraftfahrzeug nach einem der Ansprüche 3 bis 11, bei der der Dachfensterbereich (18b) zumindest teilweise mit einem Heizleiter und/oder Stromleiter versehen ist.

13. Kraftfahrzeug nach einem der vorhergehenden Ansprüche, bei dem zwischen den Längsrahmenteilen ein längsbeweglicher Sonnenschutz (26) vorgesehen ist.

14. Kraftfahrzeug nach Anspruch 13, bei dem der Sonnenschutz (26) als Rollo ausgebildet ist.

15. Kraftfahrzeug nach einem der vorhergehenden Ansprüche, bei dem die Frontfensterscheibe (18) ein Längen- zu Breitenverhältnis von 0,7 bis 1,6, vorzugsweise von 0,9 bis 1,6 aufweist.

16. Kraftfahrzeug nach einem der vorhergehenden Ansprüche, bei dem die Frontfensterscheibe (18) aus Sicherheitsglas, insbesondere Silikatglas gebildet ist.

## Claims

1. A motor vehicle (1), comprising a front window pane (18) sealing an opening of the vehicle, with the vehicle opening and the front window pane (18) extending along two A-columns supporting the vehicle roof (10) and into the region of the vehicle roof (10), **characterized in that** the vehicle roof (10) comprises a roof frame (12) which is formed by two longitudinal frame parts and two transverse frame parts, with a first transverse frame part being arranged at the rear end of the longitudinal frame parts and a second transverse frame part (22) being arranged centrally in the region between the longitudinal frame parts in the roof (10), and that the front window pane (18) is delimited by the second transverse frame part (22).

2. A motor vehicle according to claim 1, wherein the vehicle opening and the front window pane (18) extend between the two A-columns (14) and between the respectively adjacent lateral longitudinal frame parts.

3. A motor vehicle according to claim 1 or 2, wherein the vehicle opening and the front window pane (18) extend up to the central region of the vehicle roof (10) and preferably up to the height of the B-columns (14), and wherein the front window pane (18) comprises a roof window area (18b) which is substantially formed between the lateral longitudinal frame parts, and comprises a window area (18a) which is substantially formed between the two A-columns.

4. A motor vehicle according to claim 3, wherein at least the window area (18a) and/or the roof window area (18b) has a convex shape in the cross section.

5. A motor vehicle according to claim 3 or 4, wherein the secants at the transition point between the window area (18a) and the roof window area (18b) enclose an angle of between 90° and 150°.

6. A motor vehicle according to one of the claims 3 to 5, wherein the secant of the roof window area (18b) extends parallel to a horizontally arranged plane or encloses an acute angle of 0° to 15° with said plane.

7. A motor vehicle according to one of the claims 3 to 6, wherein the window area (18a) and the roof window area (18b) are arranged as an integral window area.

8. A motor vehicle according to one of the claims 3 to 7, wherein the change of the surface curvature extends in a constant manner at the transition point from the window area (18a) to the roof window area (18b).

9. A motor vehicle according to one of the claims 3 to 8, wherein the window area (18a) and the roof window area (18b) are arranged transparently in their entire extension.

10. A motor vehicle according to one of the claims 3 to 9, wherein the roof window area (18b) is tinted at least in part.

11. A motor vehicle according to one of the claims 3 to 10, wherein the roof window area (18b) is tinted at least partly darker than the window area (18a).

12. A motor vehicle according to one of the claims 3 to 11, wherein the roof window area (18b) is provided at least partly with a heating conductor and/or current conductor.

13. A motor vehicle according to one of the preceding claims, wherein a longitudinally movable sunshade (26) is provided between the longitudinal frame parts.

14. A motor vehicle according to claim 13, wherein the sunshade (26) is arranged as a blind.

15. A motor vehicle according to one of the preceding claims, wherein the front window pane (18) has a ratio of length to width of 0.7 to 1.6, preferably 0.9 to 1.6.

16. A motor vehicle according to one of the preceding claims, wherein the front window pane (18) is made of safety glass, especially silicate glass.

## Revendications

1. Véhicule à moteur (1) avec une vitre de pare-brise (18) fermant une ouverture du véhicule, l'ouverture du véhicule et la vitre de pare-brise (18) s'étendant le long de deux montants A (14) qui portent un toit (10) du véhicule et dans la zone du toit (10) du véhicule, **caractérisé en ce que** le toit (10) du véhicule présente un cadre de toit (12) formé par deux parties de cadre longitudinales et deux parties de cadre transversales, une première partie de cadre transversale étant disposée à l'extrémité arrière des parties de cadre longitudinales et une deuxième partie de cadre transversale (22) au milieu dans la zone comprise entre les parties de cadre longitudinales dans le toit (10) et **en ce que** la vitre de pare-brise (18) est délimitée par la deuxième partie de cadre transversale (22).

2. Véhicule à moteur selon la revendication 1, dans lequel l'ouverture du véhicule et la vitre de pare-brise (18) s'étendent entre les deux montants A (14) et entre les parties longitudinales de cadre qui s'y raccordent.

3. Véhicule à moteur selon la revendication 1 ou 2, dans lequel l'ouverture du véhicule et la vitre de pare-brise (18) s'étendent jusqu'à la partie médiane du toit (10) du véhicule et de préférence jusqu'au niveau des montants B (14), et dans lequel la vitre de pare-brise (18) présente une zone de fenêtre de toit (18b) qui est formée pour l'essentiel entre les parties de cadre longitudinales, et présente une zone de fenêtre (18a) qui est formée pour l'essentiel entre les deux montants A.

4. Véhicule à moteur selon la revendication 3, dans lequel au moins la zone de fenêtre (18a) et/ou la zone de fenêtre de toit (18b) ont une forme convexe en section.

5. Véhicule à moteur selon la revendication 3 ou 4, dans lequel les sécantes à la transition entre la zone de fenêtre (18a) et la zone de fenêtre de toit (18b) forment un angle compris entre 90° et 150°.

6. Véhicule à moteur selon l'une des revendications 3 à 5, dans lequel la sécante de la zone de fenêtre de toit (18b) s'étend parallèlement à un plan horizontal ou forme avec celui-ci un angle aigu de 0° à 15°.

7. Véhicule à moteur selon l'une des revendications 3 à 6, dans lequel la zone de fenêtre (18a) et la zone de fenêtre de toit (18b) sont conformées comme une zone de fenêtre d'une pièce.

8. Véhicule à moteur selon l'une des revendications 3 à 7, dans lequel le changement de courbure de surface à la transition entre la zone de fenêtre (18a) et la zone de fenêtre de toit (18b) se fait régulièrement.

9. Véhicule à moteur selon l'une des revendications 3 à 8, dans lequel la zone de fenêtre (18a) et la zone de fenêtre de toit (18b) sont transparentes sur toute leur étendue.

10. Véhicule à moteur selon l'une des revendications 3 à 9, dans lequel la zone de fenêtre de toit (18b) est au moins partiellement teintée.

11. Véhicule à moteur selon l'une des revendications 3 à 10, dans lequel la zone de fenêtre de toit (18b) est teintée au moins partiellement plus foncé que la zone de fenêtre (18a).

12. Véhicule à moteur selon l'une des revendications 3 à 11, dans lequel la zone de fenêtre de toit (18b) est munie au moins en partie d'un conducteur chauffant et/ou d'un conducteur électrique.

13. Véhicule à moteur selon l'une des revendications précédentes, dans lequel un pare-soleil (26) déplaçable longitudinalement est prévu entre les parties de cadre longitudinales.

14. Véhicule à moteur selon la revendication 13, dans lequel le pare-soleil (26) est conçu comme un store.

15. Véhicule à moteur selon l'une des revendications précédentes, dans lequel la vitre de pare-brise (18) présente un rapport entre longueur et largeur de 0,7 à 1,6, de préférence de 0,9 à 1,6.

16. Véhicule à moteur selon l'une des revendications précédentes, dans lequel la vitre de pare-brise (18) est formée de verre de sécurité, en particulier de verre de silicate.
